# EUROPÄISCHE PATENTSCHRIFT

(11) **EP 2 269 852 B1**
(45) Veröffentlichungstag und Bekanntmachung des Hinweises auf die Patenterteilung: **18.01.2012**
(21) Anmeldenummer: 10002404.1
(22) Anmeldetag: 09.03.2010
(51) Int. Cl.: B60J 1/20, B60K 13/02

(54) **Kraftfahrzeug und Heckdeckel**
Motor vehicle and boot cover for same
Véhicule automobile et toit ouvrant pour un véhicule automobile

(30) Priorität: 01.07.2009 DE 102009031250
(43) Veröffentlichungstag der Anmeldung: 05.01.2011
(73) Patentinhaber: Dr. Ing. h.c. F. Porsche AG, 70435 Stuttgart (DE)
(72) Erfinder: Froeschle, Mathias, 73760 Ostfildern (DE); Larson, Grant, 71642 Ludwigsburg (DE)

(56) Entgegenhaltungen:
- EP-A1- 0 711 700
- WO-A1-03/018343
- DE-A1- 2 736 225
- DE-A1- 19 806 610
- GB-A- 2 142 287
- US-A- 2 933 344
- US-A- 3 072 431
- US-A1- 2005 093 319

## Beschreibung

Bei der Erfindung wird ausgegangen von einem Kraftfahrzeug gemäß Oberbegriff des Patentanspruchs 1 sowie von einem Heckdeckel für ein Kraftfahrzeug, gemäß Oberbegriff des Patentanspruchs 10.

Ein derartiges Kraftfahrzeug bzw. ein solcher Heckdeckel ist aus der US 4,275,915 bekannt. Es besitzt ein Fahrzeugdach mit jeweils einem seitlichen Dachlängsholm, unter denen Seitenscheiben des Kraftfahrzeugs angeordnet sind. An die Dachlängsholme schließen sich so genannte Finnen an, zwischen denen eine gegenüber dem Fahrzeugdach abgesetzte Deckelaußenhaut eines Heckdeckels angeordnet ist. Von dem Heckdeckel gehen aufrechte Seitenwände aus, die die Innenseiten der Finnen bilden.

Aus der DE 40 26 518 A1 ist ein Kraftfahrzeug bekannt, bei dem in den oberhalb einer Gürtellinie liegenden Abschnitten der C-Säulen Lufteinlässe ausgebildet sind, die über einen Luftkanal zu über der Heckklappe mündenden Luftauslassöffnungen führen.

Nach der FR 25 75 127 A1 ist auf einem Heckdeckel eine Luftleiteinrichtung mit einem Heckspoiler angeordnet, dem ein rahmenartiges Luftleitelement vorgeschaltet ist, das in seitlichen Bereichen Öffnungen aufweist, um eine Luftströmung von der Karosserieseitenwand in Richtung Heckspoiler umzuleiten.

Ferner sind aus dem Stand der Technik Kraftfahrzeuge bekannt, bei denen für eine Luftversorgung in dem Heckdeckel Öffnungen angebracht sind, so dass eine darunterliegende Antriebsmaschine versorgt werden kann. Hierzu wird beispielsweise auf die DE 101 43 867 A1 verwiesen.

Zudem ist aus der DE 30 17 919 ein Kraftfahrzeug bekannt, welches in oberhalb einer Fahrzeuggürtellinie liegenden Abschnitten der C-Säule Lufteinlässe aufweist, die innerhalb der Seitenwand des Kraftfahrzeugs zu einer Kühleinrichtung führen.

Aus der EP 0 711 700 A1 ist ein Kraftfahrzeug bekannt, bei dem sich mit Abstand an die seitlichen Dachlängsholme ein Heckdeckel mit einer Luftleiteinrichtung anschließt, wobei die Luftleiteinrichtung einen Spoiler und einen darüber angeordneten Flügel aufweist, die über seitliche, aufrecht stehende Seitenwangen miteinander verbunden sind. An den Innenseiten der Seitenwangen sind Einströmöffnungen zur Zuführung von Kühlluft zum Motor ausgebildet. Unmittelbar vor dem Spoiler ist ein Lufteinlassgitter ausgebildet.

Es ist daher Aufgabe der Erfindung, ein Kraftfahrzeug der eingangs genannten Art zu optimieren.

Gelöst wird diese Aufgabe mit einem Kraftfahrzeug, welches die in Anspruch 1 genannten Merkmale aufweist, bzw. mit einem Heckdeckel für ein Kraftfahrzeug mit den Merkmalen des Anspruchs 10. Vorteilhafte Ausgestaltungen sind Gegenstand der Unteransprüche.

Das erfindungsgemäße Fahrzeug gemäß Patentanspruch 1 zeichnet sich insbesondere dadurch aus, dass über die Lufteinlassöffnung, den Luftkanal und die an der Innenseite liegende Luftauslassöffnung ein Luftstrom über die Deckelaußenhaut geleitet werden kann, wobei in besonders vorteilhafter Weise ein Teil des Luftstroms für die Versorgung des Aggregats abgezweigt und ein anderer Teil des Luftstroms zur optimierten Anströmung der heckseitigen Luftleiteinrichtung geführt wird. Damit lässt sich auch bei Kraftfahrzeugen mit der Finnenoptik einerseits das Aggregat mit der notwendigen Luft versorgen und andererseits kann die Luftleiteinrichtung eine optimierte Wirkung entfalten, wenn das Kraftfahrzeug in Betrieb ist. Dies gilt insbesondere, wenn das Aggregat unterhalb der Deckelaußenhaut angeordnet ist. In bevorzugter Ausführungsform handelt es sich bei dem Aggregat also um die Antriebsmaschine des Kraftfahrzeugs. Es wäre jedoch auch denkbar, ein anderes Aggregat des Kraftfahrzeugs über den zumindest einen Versorgungslufteinlass auf der Deckelaußenhaut mit der notwendigen Luftströmung zu versorgen. Dieses Aggregat könnte beispielsweise eine Kühleinrichtung oder ähnliches sein. Denkbar wäre es auch, als Aggregat eine Energieversorgungseinrichtung des Kraftfahrzeugs mit Luft zu versorgen, wie beispielsweise eine Batterie oder dergleichen. Diese Vorteile lassen sich auch mit einem Heckdeckel für ein Kraftfahrzeug erreichen, der die Merkmale des Patentanspruchs 10 aufweist.

Besonders bevorzugt wird ein Ausführungsbeispiel, bei dem zwei Versorgungslufteinlässe auf der Deckelaußenhaut ausgebildet sind. Ist das zu versorgende Aggregat eine Antriebsmaschine, könnten beispielsweise die beiden Versorgungslufteinlässe derart unterschiedlich ausgebildet sein, dass beispielsweise über einen ersten Versorgungslufteinlass Prozessluft, beispielsweise Verbrennungsluft, der Antriebsmaschine selbst zugeführt wird und der zweite Versorgungslufteinlass beispielsweise der Luftspülung des Raumes dient, in dem die Antriebsmaschine angeordnet ist.

Nach einem besonders bevorzugten Ausführungsbeispiel ist die heckseitige Luftleiteinrichtung ein Heckspoiler. Mit der erfindungsgemäßen Luftführung kann der Heckspoiler mit einem optimierten Luftstrom versorgt werden. Die seitlichen Lufteinlassöffnungen beeinflussen die Druckverhältnisse im Heckbereich des Fahrzeugs positiv, so dass insbesondere ein verbesserter Abtrieb an der Hinterachse des Kraftfahrzeugs erreicht wird.

Ein ganz besonders bevorzugtes Ausführungsbeispiel zeichnet sich dadurch aus, dass der Luftleitkanal zumindest abschnittsweise zumindest teilweise transparent ausgebildet ist. Da die Finnen und damit auch der Luftleitkanal oberhalb der Gürtellinie liegen, wäre durch den zumindest teilweise teiltransparenten Luftkanal ein Blick nach schräg hinten aus dem Fahrzeuginnenraum möglich, so dass die Rundumsicht des Fahrzeugführers verbessert ist. Dies gilt insbesondere, wenn der Luftkanal mit einer Kanalwand an die Seitenscheibe anschließt. Denkbar wäre es also, zumindest die an die Seitenscheibe anschließende Kanalwand des Luftkanals zumindest teilweise bzw. abschnittsweise zumindest teiltransparent auszuführen.

Ein bevorzugtes Ausführungsbeispiel zeichnet sich dadurch aus, dass der Heckdeckel neben der Deckelaußenhaut eine davon ausgehende etwa aufrechte Seitenwand aufweist, die die Innenseite der Finne bildet und die die Luftauslassöffnung aufweist. Damit ist es auf einfache Art und Weise möglich, den ansonsten üblichen Dichtungsverlauf bei Kraftfahrzeugen mit Heckklappe beizubehalten und dies nicht im Bereich der Finnen oder ähnliches verlagern zu müssen.

Bevorzugt wird weiterhin ein Ausführungsbeispiel, bei dem der Luftkanal durch ein ein- oder mehrteiliges Bauteil gebildet wird. Der Luftkanal setzt somit die Lufteinlassöffnung fort und endet an der Luftauslassöffnung, so dass die Luftversorgung auf einfache Art und Weise bereitgestellt werden kann, insbesondere dann, wenn - wie vorstehend beschrieben - die Luftauslassöffnung Bestandteil der Seitenwand des Heckdeckels ist.

Bevorzugt ist das Kraftfahrzeug mit einer Antriebsmaschine in so genannter Mittelmotor- oder Heckmotoranordnung ausgestattet.

Die Erfindung wird nachfolgend anhand von Ausführungsbeispielen mit Bezug auf die Zeichnung näher erläutert: Es zeigen:
- Fig. 1: in einer Perspektive von schräg links hinten teilweise ein Kraftfahrzeug mit einem Fahrzeugdach, Finnen und einem Heckdeckel,
- Fig. 2: in einer Detaildarstellung den Heckdeckel und Luftkanäle und
- Fig. 3: einen Schnitt entlang der Linie III-III in Fig. 1.

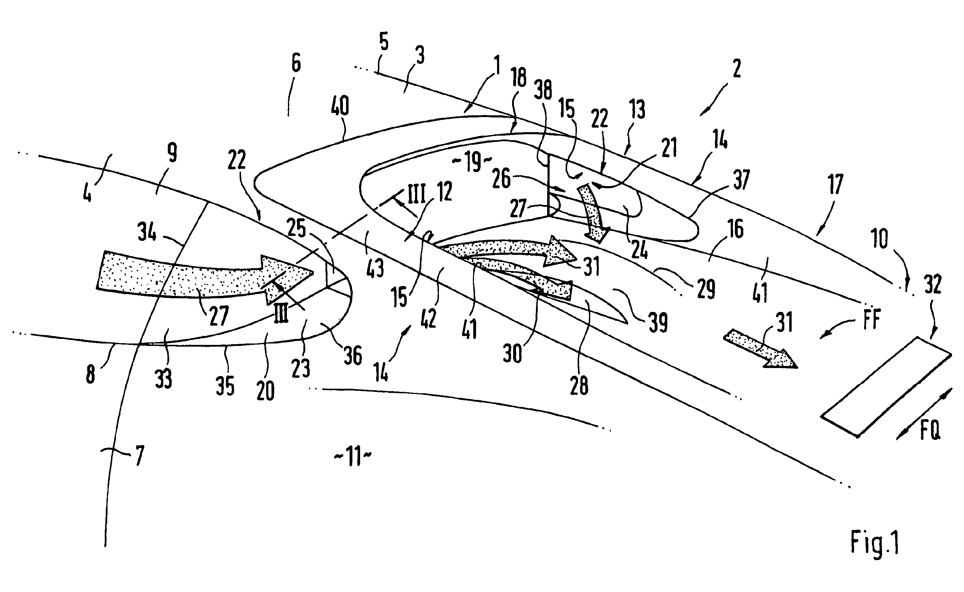

Fig. 1 zeigt ausschnittweise eine Karosserie 1 von einem Kraftfahrzeug 2. Von der Karosserie 1 ist dargestellt ein Fahrzeugdach 3, das zwischen zwei mit Abstand zueinander liegenden seitlichen Dachrahmen bzw. Dachlängsholmen 4 und 5 eine Dachplatte 6 aufweist. Ferner ist von der Karosserie 1 eine Seitentür 7 zu sehen, die oberhalb einer Gürtellinie 8 der Karosserie 1 eine Seitenscheibe 9 aufweist. Die Seitenscheibe 9 liegt somit unter dem Dachlängsholm 4. In Richtung Fahrzeugheck 10 schließt sich hinter der Seitentür 7 eine hintere Seitenwand 11 der Karosserie 1 an.

In Richtung Fahrzeugheck 10 sind die beiden seitlichen Dachlängsholme 4 und 5 mit einer Verlängerung in Form von so genannten Finnen 12 und 13 versehen. Jede Finne 12, 13 bildet einen oberhalb der Gürtellinie 8 verlaufenden Karosserieabschnitt, der in einer Draufsicht gesehen als streifenförmige Verlängerung der Dachlängsholme 4 und 5 ausgebildet ist. In Richtung Fahrzeugheck 10 fallen die Finnen in ihrer Höhe ab und bilden in einer Seitenansicht gesehen eine etwa dreieckförmige Wand. Jede Finne 12, 13 weist eine Außenseite 14 sowie eine Innenseite 15 auf. Zwischen den Innenseiten 15, die also mit einem in Fahrzeugquerrichtung FQ gemessenen Abstand zueinander liegen, ist eine Deckelaußenhaut 16 eines Heckdeckels 17 angeordnet. Bei einem derartigen Kraftfahrzeug 2 mit Finnen 12, 13 ist die Deckelaußenhaut 16 gegenüber dem Fahrzeugdach 3 abgesetzt, d.h. zwischen Deckelaußenhaut 16 und Fahrzeugdach 3, insbesondere der Dachplatte 6, ist eine mehr oder weniger steil abfallende Stufe 18 gebildet. Innerhalb dieser Stufe 18 kann ein Heckfenster 19 angeordnet sein. In der gezeigten Ausführungsform steht das Heckfenster 19 etwa aufrecht, insbesondere senkrecht zwischen der Deckelaußenhaut 16 und dem Fahrzeugdach 3. Das Heckfenster 19 kann Bestandteil der Karosserie 1, daran also fest angebracht sein, oder aber Bestandteil des Heckdeckels 17 sein.

An zumindest einer Außenseite 14 der Finne 12 und/oder 13 ist eine Lufteinlassöffnung 20, 21 einer Luftführungseinrichtung 22 vorgesehen. Im Ausführungsbeispiel sind beide Finnen 12, 13 mit einer Lufteinlassöffnung 20, 21 ausgestattet, die benachbart zu der jeweiligen Seitenscheibe 8 angeordnet sind. An jede Lufteinlassöffnung 20, 21 schließt sich ein nach innen gerichteter Luftkanal 23, 24 an, die jeweils zu einer an den Innenseiten 15 der Finnen 12, 13 liegenden Luftauslassöffnung 25, 26 führen. Durch die so gebildete Luftführungseinrichtungen 22 wird von jeder Fahrzeugseite ein Luftstrom 27 in den Bereich zwischen die Finnen 12, 13 geführt. Nachdem der Luftstrom 27 bzw. die Luftströme 27 die Lufteinlassöffnung 20, 21, den Luftkanal 23 bzw. 24 und die jeweilige Luftauslassöffnung 25, 26 passiert hat, strömt dieser über die Deckelaußenhaut 16 in Richtung Fahrzeugheck 10.

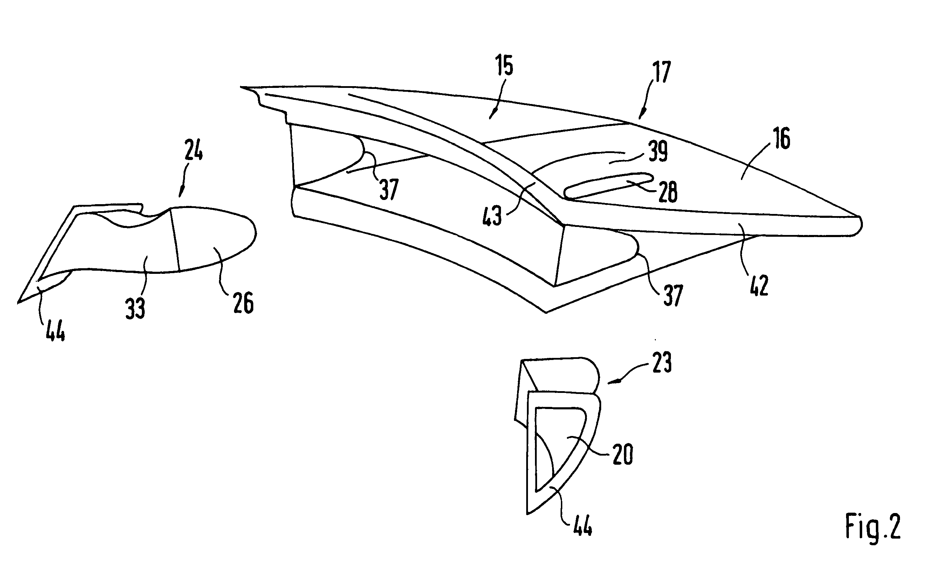

An dem Deckelaußenblech 16 ist stromabwärts der Luftauslassöffnung 25, 26 zumindest ein Versorgungslufteinlass 28 ausgebildet, der zu einem unter der Deckelaußenhaut 16 liegenden Raum RA (Fig. 3) für ein Aggregat (nicht dargestellt) führt. An der Deckelaußenhaut 16 können auch mehrere Versorgungslufteinlässe 28, 29 vorgesehen sein. Im Ausführungsbeispiel sind zwei Versorgungslufteinlässe 28, 29 ausgebildet, wobei jeweils ein Versorgungslufteinlass 28, 29 einer Luftauslassöffnung 25, 26 zugeordnet ist, d.h. im jeweiligen Luftstrom 27 liegt. Die beiden Versorgungslufteinlässe 28, 29 können mit Abstand zueinander liegen, der insbesondere in Fahrzeugquerrichtung FQ gemessen wird. In bevorzugter Weise liegen die Versorgungslufteinlässe 28, 29 nahe des Heckfensters 19. Ein Teil des Luftstromes 27 wird als Versorgungsluftstrom 30 durch den zumindest einen Versorgungslufteinlass 28, 29 eintreten und in den darunter liegenden Raum RA für das nicht gezeigte Aggregat einströmen. Ein anderer Teil des jeweiligen Luftstroms 27, der nicht in den Versorgungslufteinlass 28 abgezweigt wird, wird nachfolgend als Anströmung 31 bezeichnet, die über das Deckelaußenblech 16 hinweg in Richtung Fahrzeugheck 10 zu einer heckseitigen Luftleiteinrichtung 32 des Kraftfahrzeugs 2 strömt. Entsprechendes gilt auch für die der rechten Fahrzeugseite zugeordnete Luftführungseinrichtung 22 mit der Luftauslassöffnung 24, obwohl dort der Versorgungsluftstrom und die Anströmung nicht eingezeichnet sind. Die Luftleiteinrichtung 32 liegt also hinter dem bzw. stromabwärts zu dem Versorgungslufteinlass 28, 29. Die Luftleiteinrichtung 32 kann auf der Deckelaußenhaut 16 oder stromabwärts an einem anderen Teil der Karosserie 1 angebracht sein. Zwischen dem Versorgungslufteinlass 28, 29 und der Luftleiteinrichtung 32 bildet die Deckelaußenhaut 16 eine Strömungsleitfläche FF für die Anströmung 31.

Die heckseitige Luftleiteinrichtung 32 ist insbesondere als Heckspoiler ausgebildet, der beispielsweise auf dem Heckdeckel 17 oder dahinter angeordnet sein kann. Die heckseitige Luftleiteinrichtung 32 kann feststehend oder ein- und ausfahrbar und/oder ggf. in der Neigung verstellbar ausgebildet sein. Dadurch, dass jeweils die Anströmung 31 von dem jeweiligen Luftstrom 27 abgezweigt wird, kann die heckseitige Luftleiteinrichtung 32 optimiert angeströmt werden, obwohl die Luftströmung über das Fahrzeugdach 3 durch die Stufe 18 gestört sein kann.

Wie Fig. 1 zeigt, schließt sich eine Kanalwand 33 des Luftkanals 23 unmittelbar an die Seitenscheibe 9 an. Die Lufteinlassöffnung 20 wird daher begrenzt von dem hinteren Rand 34 der Seitenscheibe 9 und einem Ausschnitt 35 in der Karosserieseitenwand 11, und zwar oberhalb der Gürtellinie 8. Die Kanalwand 33 kann zumindest teilweise zumindest teiltransparent ausgeführt sein, so dass aus dem Fahrzeuginnenraum schräg nach hinten durch die Kanalwand 33 hindurchgeblickt werden kann. Die übrige Kanalwand 36 des Luftkanals 23 könnte ebenfalls zumindest abschnittweise zumindest teiltransparent ausgeführt sein. In bevorzugter Ausführungsform ist jedoch die Kanalwand 33 zwischen der Lufteinlassöffnung 20 und der Luftauslassöffnung 25 zumindest teiltransparent ausgeführt, während die übrige Kanalwand 36 undurchsichtig ist. Für die Lufteinlassöffnung 21 bzw. den Luftkanal 24 gilt dies in analoger Weise.

Die Luftauslassöffnung 26 wird begrenzt von einem Ausschnitt 37 an der Innenseite 15 der Finne 13 und von einem seitlichen, aufrecht verlaufenden Rand 38 des Heckfensters 19. Auf dem Deckelaußenblech 16 kann zumindest eine Erhebung 39 ausgebildet sein, in der der zumindest eine Versorgungslufteinlass 28 bzw. 29 angeordnet ist. Der Versorgungslufteinlass 28 bzw. 29 öffnet sich dadurch in Richtung Luftauslassöffnung 25 bzw. 26, so dass auf besonders günstige Weise der Versorgungsluftstrom 30 in den jeweilige Versorgungslufteinlass 28 bzw. 29 einströmen kann.

Im gezeigten Ausführungsbeispiel ist der Heckdeckel 17 in einen Karosserieausschnitt 40 eingepasst, der sich über die jeweilige Karosserieseitenwand 11 und das Fahrzeugdach 3 hinein erstreckt. Der Heckdeckel 17 besitzt somit neben der Deckelaußenhaut 16 jeweils seitlich außenliegende, davon ausgehende etwa aufrecht verlaufende Seitenwände 41, die die Innenseite der Finnen 12, 13 bilden und somit die Luftauslassöffnungen 25, 26 bzw. die Ausschnitte 37 aufweisen. Die beiden aufrechten Seitenwände 41 gehen in einen die Oberseite 42 der Finnen 12, 13 bildenden Rahmenabschnitt 43 über, der in Draufsicht gesehen U-förmig ausgeführt ist, und sich so bis in die Dachplatte 6 hinein erstreckt.

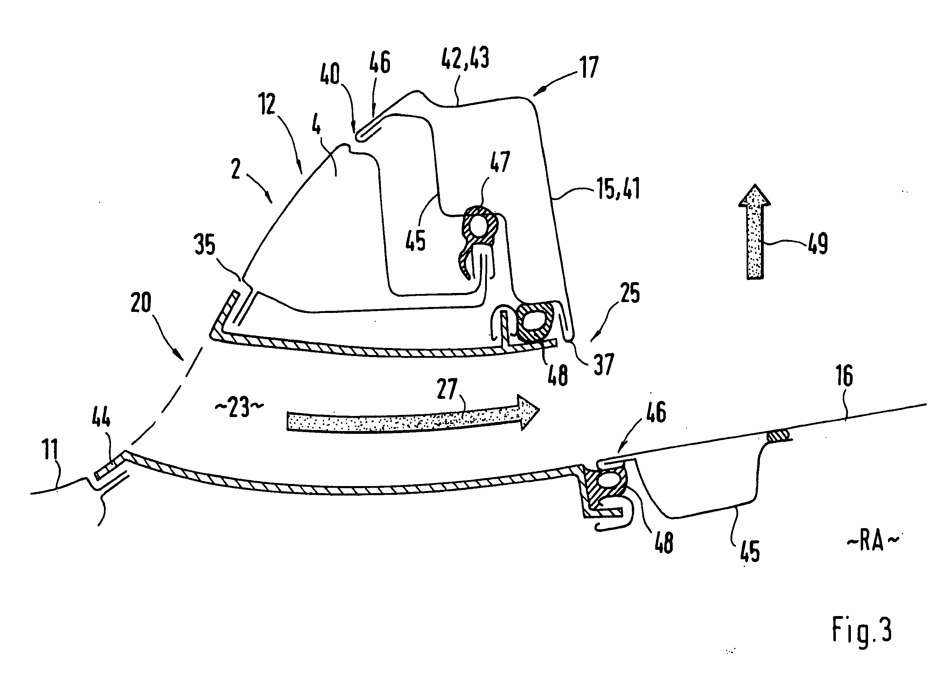

Wie Fig. 2 zeigt, können die Luftkanäle 23 und 24 als ein- oder mehrteilige Baugruppen ausgebildet sein. Insbesondere sind hierfür Kunststoffteile vorgesehen. Im Bereich der Lufteinlassöffnungen 20, 21 kann der Luftkanal 23, 24 einen Kragen bzw. Flansch 44 aufweisen, der beispielsweise umlaufend ausgebildet sein kann und - wie Fig. 3 zeigt - an der Karosserie 2 des Kraftfahrzeugs 1 anliegen kann. Der Querschnitt des Luftkanals 23 bzw. 24 kann beliebig ausgeführt sein, beispielsweise eckig oder kreisförmig sein. Wie im gezeigten Ausführungsbeispiel dargestellt, ist insbesondere vorgesehen, dass sich der Luftkanal 23, 24 von der Einlassöffnung 20 bzw. 21 stromabwärts trichterförmig bis zur jeweiligen Luftauslassöffnung 25, 26 erweitert. Der Querschnitt kann dabei konstant oder sich verändernd ausgebildet sein. Insbesondere ist der Querschnitt im Bereich der Auslassöffnung und der Einlassöffnung halbkreisförmig oder entspricht etwa der Hälfte eines Ovals bzw. einer Ellipse. Im Übrigen sind in den Fig. 1 und 2 gleiche bzw. gleichwirkende Teile mit den gleichen Bezugszeichen versehen, so dass auf deren Beschreibung verwiesen wird. Dies gilt im Übrigen auch für die Schnittdarstellung gemäß Fig. 3, auf die nachfolgend näher eingegangen wird. Der Heckdeckel 17 besitzt das Deckelaußenblech 16, welches noch die aufrechten Seitenwände 41 sowie die den umlaufenden Rahmen 43 bildende Oberseite 42 aufweist. Der Heckdeckel 17 ist zweischalig mit dem Deckelaußenblech und einem Deckelinnenblech 45 realisiert, wobei Deckelaußenblech und Deckelinnenblech an ihrem Randbereich 46 gefügt sind. Ebenfalls ist der Dachlängsholm 4 bzw. die Finne 12 im Schnitt dargestellt, die als Hohlprofil ausgebildet ist und abschnittweise den Karosserieausschnitt 40 aufweist. Zwischen Deckelinnenblech 45 und Finne 12 bzw. Dachlängsholm 4 ist eine erste Deckeldichtung 47 angeordnet, die insbesondere umlaufend an dem Karosserieausschnitt 40 angebracht ist. Der Ausschnitt 37 an der Innenseite 15 der Finne 12 ist gegenüber dem Luftkanal 23 durch eine weitere Dichtungseinrichtung 48 abgedichtet. Dabei sind die Dichtungseinrichtungen 47 und 48 so angeordnet, dass der Heckdeckel 17 in der in Fig. 1 gezeigten Schließstellung auf ihnen aufliegt, für ein Öffnen des Deckels dieser jedoch von den Dichtungseinrichtungen 47 und 48 abgehoben werden kann. Insbesondere ist dabei vorgesehen, dass der Deckel 17 über eine benachbart zum Fahrzeugdach 3 liegende hier nicht dargestellte Schwenkachse bewegt werden kann, wobei in Fig. 3 durch einen Pfeil 49 die nach oben gerichtete Öffnungsbewegung angedeutet ist.

## Patentansprüche

1. Kraftfahrzeug (2) mit einem Fahrzeugdach (3) mit zwei seitlichen Dachlängsholmen (4, 5), unter denen Seitenscheiben (9) angeordnet sind und an die sich als Verlängerung der Dachlängsholme (4, 5) jeweils eine Finne (12, 13) anschließt, und mit einer zwischen den Finnen (12, 13) angeordneten Deckelaußenhaut (16) eines Heckdeckels (17), **dadurch gekennzeichnet, dass** zumindest an einer der Finnen (12, 13) an ihrer Außenseite (14) benachbart zu der Seitenscheibe (9) eine Lufteinlassöffnung (20, 21) ausgebildet ist, die über einen Luftkanal (23, 24) mit einer benachbart zur Deckelaußenhaut (16) an der Innenseite (15) der Finne (12, 13) liegenden Luftauslassöffnung (25, 26) verbunden ist, dass die Deckelaußenhaut (16) zumindest einen Versorgungslufteinlass (28, 29) für ein Aggregat des Kraftfahrzeugs (2) aufweist, und dass hinter dem Versorgungslufteinlasses (28, 29) eine heckseitige Luftleiteinrichtung (32) angeordnet ist, wobei über die Lufteinlassöffnung (20, 21), den Luftkanal (23 24) und die an der Innenseite (15) liegende Luftauslassöffnung (25, 26) ein Luftstrom (27) über die Deckelaußenhaut (16) geleitet werden kann, so dass ein Teil des Luftstroms (27) für die Versorgung des Aggregats abgezweigt und ein anderer Teil des Luftstroms (27) zur optimierten Anströmung der heckseitigen Luftleiteinrichtung (32) geführt wird.

2. Kraftfahrzeug nach Anspruch 1, **dadurch gekennzeichnet, dass** das Aggregat, insbesondere eine Antriebsmaschine, unterhalb der Deckelaußenhaut (16) angeordnet ist.

3. Kraftfahrzeug nach Anspruch 1, **dadurch gekennzeichnet, dass** an der Deckelaußenhaut (16) zwei Versorgungslufteinlässe (28, 29) ausgebildet sind.

4. Kraftfahrzeug nach Anspruch 1, **dadurch gekennzeichnet, dass** die heckseitige Luftleiteinrichtung (32) ein Heckspoiler ist.

5. Kraftfahrzeug nach Anspruch 1, **dadurch gekennzeichnet, dass** der Luftkanal (23, 24) zumindest abschnittweise zumindest teiltransparent ausgebildet ist.

6. Kraftfahrzeug nach Anspruch 1 oder 5, **dadurch gekennzeichnet, dass** der Luftkanal (23, 24) mit einer Kanalwand (33) an die Seitenscheibe (9) anschließt.

7. Kraftfahrzeug nach Anspruch 1, **dadurch gekennzeichnet, dass** der Heckdeckel (17) neben der Deckelaußenhaut (16) eine davon ausgehende etwa aufrechte Seitenwand (41) aufweist, die die Innenseite (15) der Finne (12, 13) bildet und dass die Seitenwand (41) die Luftauslassöffnung (25, 26) aufweist.

8. Kraftfahrzeug nach einem der vorhergehenden Ansprüche, **dadurch gekennzeichnet, dass** der Luftkanal (23, 24) durch ein ein- oder mehrteiliges Bauteil gebildet ist.

9. Kraftfahrzeug nach einem der vorhergehenden Ansprüche, **dadurch gekennzeichnet, dass** das Aggregat als Mittel- oder Heckmotor im Kraftfahrzeug angeordnet ist.

10. Heckdeckel (17) für ein Kraftfahrzeug (2) mit einem Fahrzeugdach (2) mit zwei seitlichen Dachlängsholmen (3, 4), unter denen Seitenscheiben (9) angeordnet sind und an die sich als Verlängerung der Dachlängsholme (4, 5) jeweils eine Finne (12, 13) anschließt, wobei zwischen den Finnen (12, 13) der Heckdeckel (17) angeordnet werden kann, der neben der Deckelaußenhaut (16) noch aufrechte Seitenwände (41) besitzt, die Innenseiten (15) der Finnen (12, 13) darstellen, **dadurch gekennzeichnet, dass** zumindest eine der Innenseiten (15) eine Luftauslassöffnung (25, 26) aufweist und dass die Deckelaußenhaut (16) zumindest einen Versorgungslufteinlass (28, 29) für ein Aggregat des Kraftfahrzeugs (2) aufweist, wobei die Deckelaußenhaut (16) stromabwärts des Versorgungslufteinlasses (28, 29) eine Strömungsleitfläche (FF) für eine Anströmung (31) für eine heckseitige Luftleiteinrichtung (32) des Kraftfahrzeugs (2) bildet, wobei die Strömungsleitfläche (FF) zwischen dem Versorgungslufteinlass (28, 29) und der Luftleiteinrichtung (32) liegt.

## Claims

1. Motor vehicle (2) with a vehicle roof (3) having two lateral roof longitudinal rails (4, 5) below which side windows (9) are arranged and which are each adjoined by a respective fin (12, 13) as an extension of the roof longitudinal rails (4, 5), and with a cover outer skin (16) of a boot cover (17), which cover outer skin is arranged between the fins (12, 13), **characterized in that** an air inlet opening (20, 21) is formed on the outside (14) of at least one of the fins (12, 13) adjacent to the side window (9), said air inlet opening being connected via an air duct (23, 24) to an air outlet opening (25, 26) located on the inside (15) of the fin (12, 13) adjacent to the cover outer skin (16), **in that** the cover outer skin (16) has at least one supply inlet (28, 29) for a unit of the motor vehicle (2), and **in that** a rear air-guiding device (32) is arranged behind the air supply inlet (28, 29), an air flow (27) being able to be conducted over the cover outer skin (16) via the air inlet opening (20, 21), the air duct (23, 24) and the air outlet opening (25, 26), located on the inside (15), such that part of the air flow (27) is branched off for supply of the unit and another part of the air flow (27) is guided to provide the optimized flow approaching the rear air-guiding device (32).

2. Motor vehicle according to Claim 1, **characterized in that** the unit, in particular an engine, is arranged below the cover outer skin (16).

3. Motor vehicle according to Claim 1, **characterized in that** two supply air inlets (28, 29) are formed on the cover outer skin (16).

4. Motor vehicle according to Claim 1, **characterized in that** the rear air-guiding device (32) is a rear spoiler.

5. Motor vehicle according to Claim 1, **characterized in that** at least part of the air duct (23, 24) is of at least semi-transparent design.

6. Motor vehicle according to Claim 1 or 5, **characterized in that** the air duct (23, 24) is connected by a duct wall (33) to the side window (9).

7. Motor vehicle according to Claim 1, **characterized in that** the air boot cover (17) has, next to the cover outer skin (16), an approximately upright side wall (41) which originates from the said cover outer skin and forms the inside (15) of the fin (12, 13), and **in that** the side wall (41) has the air outlet opening (25, 26).

8. Motor vehicle according to one of the preceding claims, **characterized in that** the air duct (23, 24) is formed by a single- or multi-part component.

9. Motor vehicle according to one of the preceding claims, **characterized in that** the unit is arranged as a central or rear engine in the motor vehicle.

10. Boot cover (17) for a motor vehicle (2) with a vehicle roof (3) having two lateral roof longitudinal rails (4, 5) below which side windows (9) are arranged and which are each adjoined by a respective fin (12, 13) as an extension of the roof longitudinal rails (4, 5), wherein the boot cover (17) can be arranged between the fins (12, 13), said boot cover also having, next to the cover outer skin (16), upright sidewalls (41) which constitute the insides (15) of the fins (12, 13), **characterized in that** at least one of the insides (15) has an air outlet opening (25, 26), and **in that** the cover outer skin (16) has at least one supply air inlet (28, 29) for a unit of the motor vehicle (2), the cover outer skin (16) upstream of the supply air inlet (28, 29) forming a flow-guiding surface (FF) for an approach flow (31) for a rear air-guiding device (32) of the motor vehicle (2), the flow-guiding surface (FF) lying between the supply air inlet (28, 29) and the air-guiding device (32).

## Revendications

1. Véhicule automobile (2) comprenant un toit de véhicule (3) avec deux longerons de toit latéraux (4, 5), sous lesquels sont disposées des vitres latérales (9) et auxquels se raccorde à chaque fois une aile (12, 13) en tant que prolongement des longerons de toit (4, 5), et avec une peau extérieure de couvercle (16) d'un couvercle arrière (17) disposée entre les ailes (12, 13), **caractérisé en ce qu'**une ouverture d'entrée d'air (20, 21) est réalisée au moins sur une des ailes (12, 13) sur son côté extérieur (14) de manière adjacente à la vitre latérale (9), laquelle ouverture d'entrée d'air est reliée au moyen d'un conduit d'air (23, 24) à une ouverture de sortie d'air (25, 26) située de manière adjacente à la peau extérieure de couvercle (16) sur le côté intérieur (15) des ailes (12, 13), **en ce que** la peau extérieure de couvercle (16) comporte au moins une entrée d'air d'alimentation (28, 29) pour un groupe du véhicule automobile (2), et **en ce qu'**un dispositif de guidage d'air côté arrière (32) est disposé derrière l'entrée d'air d'alimentation (28, 29), un flux d'air (27) pouvant être dirigé sur la peau extérieure de couvercle (16) au moyen de l'ouverture d'entrée d'air (20, 21), du conduit d'air (23, 24) et de l'ouverture de sortie d'air (25, 26) située sur le côté intérieur (15), de telle sorte qu'une partie du flux d'air (27) soit déviée pour l'alimentation du groupe et qu'une autre partie du flux d'air (27) soit guidée en vue d'un afflux optimisé dans le dispositif de guidage d'air (32) côté arrière.

2. Véhicule automobile selon la revendication 1, **caractérisé en ce que** le groupe, en particulier un moteur d'entraînement, est disposé en dessous de la peau extérieure de couvercle (16).

3. Véhicule automobile selon la revendication 1, **caractérisé en ce que** deux entrées d'air d'alimentation (28, 29) sont réalisées sur la peau extérieure de couvercle (16).

4. Véhicule automobile selon la revendication 1, **caractérisé en ce que** le dispositif de guidage d'air (32) côté arrière est un becquet arrière.

5. Véhicule automobile selon la revendication 1, **caractérisé en ce que** le conduit d'air (23, 24) est réalisé au moins par sections de manière au moins partiellement transparente.

6. Véhicule automobile selon la revendication 1 ou 5, **caractérisé en ce que** le conduit d'air (23, 24) se raccorde à la vitre latérale (9) par une paroi de conduit (33).

7. Véhicule automobile selon la revendication 1, **caractérisé en ce que** le couvercle arrière (17), en plus de la peau extérieure de couvercle (16), comporte une paroi latérale (41) approximativement verticale s'étendant à partir de celle-ci, laquelle paroi latérale forme le côté intérieur (15) des ailes (12, 13), et **en ce que** la paroi latérale (41) comporte l'ouverture de sortie d'air (25, 26).

8. Véhicule automobile selon l'une quelconque des revendications précédentes, **caractérisé en ce que** le conduit d'air (23, 24) est formé par un élément en une seule ou plusieurs parties.

9. Véhicule automobile selon l'une quelconque des revendications précédentes, **caractérisé en ce que** le groupe est disposé dans le véhicule automobile en tant que moteur central ou arrière.

10. Couvercle arrière (17) pour un véhicule automobile (2) comprenant un toit de véhicule (3) avec deux longerons de toit latéraux (4, 5), sous lesquels sont disposées des vitres latérales (9) et auxquels se raccorde à chaque fois une aile (12, 13) en tant que prolongement des longerons de toit (4, 5), le couvercle arrière (17) pouvant être disposé entre les ailes (12, 13), lequel couvercle arrière possède, en plus de la peau extérieure de couvercle (16), en outre des parois latérales (41) verticales qui constituent des côtés intérieurs (15) des ailes (12, 13), **caractérisé en ce qu'**au moins l'un des côtés intérieurs (15) comporte une ouverture de sortie d'air (25, 26), et **en ce que** la peau extérieure de couvercle (16) comporte au moins une entrée d'air d'alimentation (28, 29) pour un groupe du véhicule automobile (2), la peau extérieure de couvercle (16) formant en aval de l'entrée d'air d'alimentation (28, 29) une surface de guidage d'écoulement (FF) pour un afflux (31) pour un dispositif de guidage d'air (32) côté arrière du véhicule automobile (2), la surface de guidage d'écoulement (FF) étant située entre l'entrée d'air d'alimentation (28, 29) et le dispositif de guidage d'air (32).
